# EUROPEAN PATENT APPLICATION

(11) **EP 2 466 404 A1**
(43) Date of publication of application: **20.06.2012**
(21) Application number: 10195004.6
(22) Date of filing: 14.12.2010
(51) Int. Cl.: G05B 19/418

(54) **Method for controlling industrial robots in a work area**

(71) Applicant: ABB AS, 1396 Billingstad (NO)
(72) Inventor: Heyer, Clint, 0553 Oslo (NO); Anisi, David, 0354 Oslo (NO); Gunnar, Johan, 5146 Bergen (NO); Lillehagen, Tommy, 1383 Asker (NO)
(74) Representative: Ahrengart, Kenneth

(57) **Abstract**

A method is disclosed for one or more users to control at least one robot in a robot work area, said work area comprising said robot, a robot controller (7a-n) and at least one tool and/or sensor for carrying out one or more movements to carry out a task, said robot being controlled by means of instructions in a robot program running in said robot controller. The method comprises receiving (51), at a distributed node (5a-n), a task program for carrying out at least part of said task based on a conversion (19) of a user command from a user (12, 12'), and sending (54) from the distributed node to said robot controller (7a-n) a robot program based on the task program with instructions for said robot (71, 81, 91) to execute one or more movements. A distributed node (5a), a central node (3), a system for carrying out the method and computer programs are also disclosed.

## Description

### TECHNICAL FIELD.

The present invention is concerned with methods and a system to control, manage, commission and support multiple robots located in physically different locations from a central server. The design of the system is focused on adding safety and robustness to facilitate remote control of robot operations. In particular it is concerned with safe and robust control of industrial robots to facilitate remote operation of robots by one or more users.

### TECHNICAL BACKGROUND

The use of industrial robots has traditionally been in controlled environments such as in factory installations or laboratories. Most often industrial robots have been installed to carry out more or less the same operation or operations continuously in an assembly line or robot cell. In other words a manufacturing environment with a physical layout that is substantially fixed or static.

Within the field of oil and gas, robotics has generally been used only sporadically. Oil companies continuously seek to create and increase business value of oil and gas installations, whilst also maintaining an absolute focus on holding high Health, Safety and Environment (HSE) standards. To address these issues, a major rethink on the conventional operation and support of oil & gas installations is required. It is well documented that industrial robots with flexible manipulators are well suited to conduct dangerous and labour intensive tasks in hazardous conditions with a high degree of accuracy.

Control of multi-robots, meaning control of more than one robot working nearby or in the same location entails challenges to avoid collisions between robots. In particular this is the case when a plurality of industrial robots are controlled from a remote location, or in operating in an environment where the physical layout is not fixed or static, when compared to a factory setting.

US2010094459 entitled: System for cooperation of multiple robots using dynamic behavior binding and method thereof; and assigned to Korea Electronics Telecomm, mentions in the context of applications and a system for cooperation of multi mobile robots how certain types of mobile robots may be selected and made to cooperate together to complete a task between them. However, the methods and system described do not provide information about monitoring or controlling actual physical robots in real physical surroundings.

US 2004210330 entitled: Control method and industrial production installation with web control system; and assigned to Kuka Schweissanlagen GmbH describes a control method for an industrial production installation, especially for manufacturing parts of unfinished vehicle bodies. In particular it describes use of a web server and web pages for intelligent applications, and mentions remote diagnosis and maintenance via the web.

There is a requirement for a human operator, a user, to be able to better control operations with an industrial robot in industrial or extraction environments.

### SUMMARY OF THE INVENTION

The aim of the present invention is to remedy one or more of the above mentioned problems. This and other aims are obtained by a method characterised by claim 1.

According to a first aspect of the invention a method is provided for controlling at least one robot in a robot work area, said work area comprising said robot, a robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements. By this means a safe and robust human interaction with an industrial robot is provided for controlling movements of the robot to carry out a task as directed by the human user.

According to another embodiment of the invention a method is provided for controlling at least one robot in a robot work area, said work area comprising said robot, at least one robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements and by validating on a central node the task program against persistent control data for said robot. In this way a robot program is validated before being applied to a robot against persistent data for the robot configuration, specification, held at a remote and/or central location.

According to another embodiment of the invention a method is provided for controlling at least one robot in a robot work area, said work area comprising said robot, a robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements and by validating on the distributed node the task program against persistent control data stored in association with the distributed node for said robot, or against data read by said distributed node from said robot controller. In this way a local validation may be made with persistent data stored locally such that and so ensure that the robot program downloaded locally matches to locally held persistent data, especially data on the robot configuration.

According to another, preferred embodiment of the invention a method is provided for controlling at least one robot in a robot work area, said work area comprising said robot, a robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements and by receiving in the robot controller from the distributed node data related to the execution of one or more movements from said robot work area, of said robot in the task program so downloaded, and sending the data from said work area to at least the distributed node.

According to another embodiment of the invention a method is provided for controlling at least one robot in a robot work area, said work area comprising said robot, a robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements and by validating on a central node the task program against persistent control data for said robot and by synchronizing task progress in said work area with movements in other work areas based on data related to the execution of one or more movements of said robot and/or said tool in the task program with data from one or more other distributed nodes. Active synchronization based on task progress data held remotely or centrally enables parallel control of more than one robot in the same or a nearby work area.

According to another embodiment of the invention a method is provided for controlling at least one robot in a robot work area, said work area comprising said robot, a robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements and by validating on a central node the task program against persistent control data for said robot and by receiving in at least the distributed node data from devices in said robot work area, monitoring progress of the task and/or updating the task program.

According to a preferred embodiment of the invention a method is provided for controlling at least one robot in a robot work area, said work area comprising said robot, a robot controller and at least one tool and/or sensor for carrying out one or more movements to carry out a task, said robot being controlled by means of instructions in a robot program running in said robot controller, the method comprising receiving, at a distributed or local node, a task program for carrying out at least part of said task based on a conversion of a user command from a user and sending from the distributed node to said robot controller a robot program based on the task program with instructions for said robot to execute one or more movements and by validating on a central node the task program against persistent control data for said robot and by updating, dependent on data related to the execution of one or more movements said robot and/or said tool in the task program, a task log for recording all events for the task.

This invention may be described as a method and a system using robotics which is explained using applications in the oil and gas industry as an exemplary example. The invention may also be practiced in another branch of industry, such as mining operations. The described methods and system is designed to be able to control, manage, commission and support multiple robots located on physically different locations and networks from a central server. The design of the system is focused on maintaining safety and robustness to the interaction with the robots to facilitate integration with and connection to users on customer networks for remote operation of robots.

The main parts of the system comprise central nodes, distributed nodes, robot controllers and industrial robots. In terms of infrastructure there are a number of central nodes that interact with distributed nodes over a secure channel. Although the functionality of the system only requires one single central node, several nodes are considered based on robustness considerations.

The distributed nodes are connected to the robot controllers in each work area, preferably on a physically secured network. In brief, the central node responds to the requests in the form of user commands from users, it allocates robots, tools and sensors needed to fulfill the request and plans how to perform the requested actions. The central node issues movement programs (in the form or one or more task programs) based on that planning process. The primary function of the local node is to execute operations from the central node on a specified robot. One distributed node can connect to several robots and one robot can also connect to several distributed nodes, offering redundancy and thus robustness in the system. The distributed nodes can also read and write data and configurations to the robot system.

The system allows controlling the robot to be done with different degrees of autonomy, from remote manual control via for example streaming data, to autonomous control where the system can perform operations without input from the user.

The system can be equipped with extensive support for management and engineering of the installation on a central level, making it available for users both directly connected to the central node but also for remote users such as, for example, an ABB support service. Via this interface, the users may do commissioning centrally, such as configuration of units (robots, tool and sensors), add and delete a robot, tool or other unit in the system, clone configurations from one unit to another, etc. This is possible since the system contains persistent data of the installation and can pass on information from this data to the distributed nodes which can in turn pass them on to the robot system. The system can also include extensive support and diagnostic features for support and troubleshooting, since all data can be gathered from the distributed nodes and presented to the user via the central node.

The methods and system exhibits the features of
- Secure communication to and isolation of robot controller from user network,
- Central commissioning, management and configuration of several robots,
- Central support and maintenance of several robots,
- Remote control of several robots,
- Enabling different degrees of autonomy in the control of the robots,
- Enabling several users to interact and control the robots with inbuilt allocation of resources,
- Direct interaction by user with a robot safeguarded by validation against persistent data at the distributed level and at the central level

Relevant scenarios for application of this invention include remote inspection, maintenance and operation of oil and/or gas fields in harsh and remote areas, such as the Arctic region, and other areas where the human presence needs to be minimized. Robotized facilities are a solution to operate such facilities with few or no personnel at the location for longer periods, a solution that enables safe and efficient commissioning and operation of such a robotized facility. Advantages in practicing this invention in an Oil and Gas application include:
- Improved HSE (reduce number of personnel on site, reduce individual risk to health and safety of the personnel, etc)
- Viable operations enabled in environments containing a high percentage of sour gas, which were previously not practical to exploit,
- Efficient system for carrying out remote operations.

According to second aspect of the invention a distributed node, or local control unit, is provided for controlling at least one robot in a robot work area comprising said robot, at least one robot controller and at least one tool and/or sensor for carrying out one or more movements to carry out a task, said robot being controlled by means of instructions in a robot program running in said robot controller, wherein said distributed node comprises a control unit and computer programs for receiving a task program for carrying out at least part of said task based on a conversion of a user command from a user, and is connected to a data network for sending from said distributed node to said robot controller a robot program based on the task program with instructions for said robot to execute one or more movements.

According to third aspect of the invention a central node, or remote control unit, is provided for controlling at least one robot in a robot work area comprising said robot, at least one robot controller (7a-n) and at least one tool and/or sensor for carrying out one or more movements to carry out a task, said robot being controlled by means of instructions in a robot program running in said robot controller, wherein said central node comprises at least one processor and computer program for sending, to at least one distributed node, and a task program for carrying out at least part of said task based on a conversion of a user command from a user input to said remote or central node.

The central nodes are typically the place on a network accessible by users, directly or via secure data tunnels. Although the functionality of the system only requires one single central node, several nodes are considered based on robustness considerations.

The basic functionality of the central node is to transform the user commands to robot operations. When a request comes in from a user, computer software and applications or programs in the node allocates a robot and tool(s) needed to perform the request. The request is translated into an operation made up of tasks that are to be performed in sequence. For each task, the node plans a path for how to move the robot to perform the task. Tasks can also include reading sensor values or be dependent on previous sensor data. The central node has access to persistent data containing all information about, for example, the layout, robots, tools and sensors that are needed to construct the operation and the tasks.

When the operation is constructed and the tasks are planned, the node synchronizes movements and tasks of the operations with other operations in progress so that in the first place robots do not collide or limit other robots in their operations. Secondly synchronizing is used for supervising task progress which in turn enables coordination robots working together in multi-robot tasks. Operations are also sanity checked against persistent configuration data to make sure each operation is valid before it is passed on. One of the unique features of this system is the unusual ability to run multiple robots in parallel. Also a user does not have to specify a robot, the next available robot with the right properties are allocated automatically according to priority. This planning and synchronization is the main functionality of the central node. The central node dynamically connects to distributed nodes and maintains the connection so that if a distributed node goes down, the central node will be aware of this. As soon as the distributed node is up again, the central node will re-connect to it.

Communication between central and distributed nodes. The central node is connected to the distributed nodes via secure data channels. The secure channel may be achieved using applications or processes such as virtual networks, firewalls and the like for providing secure communication. The secure channels can, but are not limited to be dedicated transmission lines. Preferably a combination of with apparatus and applications or processes are used.To enhance security further, the distributed node only accept a limited number of commands, for example a number of specific commands only, specified in an interface and only accepts requests from the central node. The communication channel can also connect streaming data to and from the central node to the distributed nodes, enabling both control and monitoring of specific sensors and data on a central level.

Distributed node(s). The distributed node is typically placed within a secured area close to the robot(s) and is placed on the same data network as the robots, referred to as the RobotNetwork, giving it direct access to communicate with the robot systems. One distributed node can handle one or more robots. One robot may however also be connected to several distributed nodes, hence one can place several distributed nodes on the same network to add redundancy to the system. The primary function of the local node is to execute operations from the central node on a robot specified by the central node. The operation is sanity checked against configuration data also at this level to add a redundant sanity check before the operation is executed. The tasks in the operation are then translated into code that can be executed on the robot controller; hence the programs for the robot are automatically generated. During execution, the node monitors the robot system to make sure that the tasks are completed as expected. Progress for each task is logged. If not completed as expected, it handles exceptions and reports progress back to the central node.

The distributed nodes also read data and configurations from the robot system which is passed on to the central node on request. Since the distributed node is placed locally, it can also run functionality that requires low latency such as sensor based collision detection, tracking, etc.

The distributed node also has access to persistent data about the installation, but not to the full extent as the central node. In the sanity check mentioned above the distributed node can also validate this persistent data with the actual configuration of the robot, and report back differences to the central node.

A useful feature in the distributed node is also the ability to write data and especially configurations to the robot system. In this way the user can reconfigure the system by sending a new configuration to the distributed node.

Depending on which robot system that is connected to the distributed node the node utilizes the system and supplier specific interface for the communication to the system. The robot system is abstracted so that different robots from different suppliers have the same or similar features from a central and user perspective.

Communication with robots, RobotNetwork. The communication between the Distributed node(s) and the Robot System(s) takes place on the RobotNetwork. The robot network is preferably a restricted LAN, real or virtual, that connects the distributed node with one or more robots. The communication between the distributed node and the robots can be non secured since this LAN is dedicated and physically located in a restricted and secured area.

Commissioning and engineering. The system can be equipped with extensive support for management and engineering of the installation on a central level, making it available for users both directly connected to the central node but also for remote users such as, for example, ABB support. Via this interface, the users could, centrally, carry out commissioning such as configuration of units (robots, tool and sensors), add and delete unit in the system, clone configurations from one unit to another, etc. This is possible since the system contains persistent data of the installation and can pass on this data to the distributed nodes which can in turn pass them on to the robot system.

Support and diagnostics. The system can also include extensive support and diagnostic features for support and troubleshooting, since all data can be gathered from the distributed nodes and presented to the user via the central node. Example of functionality that can be included is central access to event logs, state and diagnostic data from all connected robots. On top of this applications for service and support can be constructed to increase the ease of support.

A computer program, and a computer program recorded on a computer-readable medium is disclosed in another aspect of the invention.

### BRIEF DESCRIPTION OF THE DRAWINGS

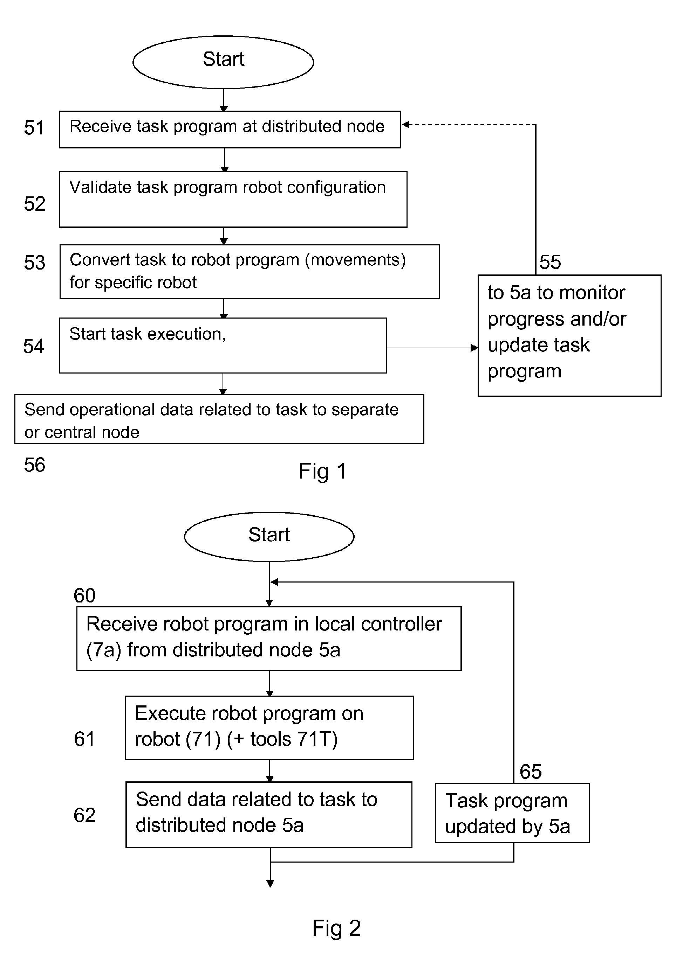

A more complete understanding of the method and system of the present invention may be had by reference to the following detailed description when taken in conjunction with the accompanying drawings wherein: Figure 1 shows a schematic flowchart for a method according to an embodiment of the invention with method steps for handling a robot task program comprising a movement program for the robot based on converted user commands at a distributed node according to an embodiment of the invention;
Figure 2 shows a schematic flowchart for a method according to the invention of Figure 1 and showing in particular method steps for handling instructions in a robot program in a robot controller according to another embodiment of the invention;
Figure 3 shows in a schematic block diagram the invention of Figure 1 and in particular a system layout including one or more distributed nodes and robot controllers according to another embodiment of the invention;
Figure 4 shows a schematic block diagram for the invention of
Figure 1 and in particular a functional layout including one or more distributed nodes, robot controllers and robots in work areas according to another embodiment of the invention;

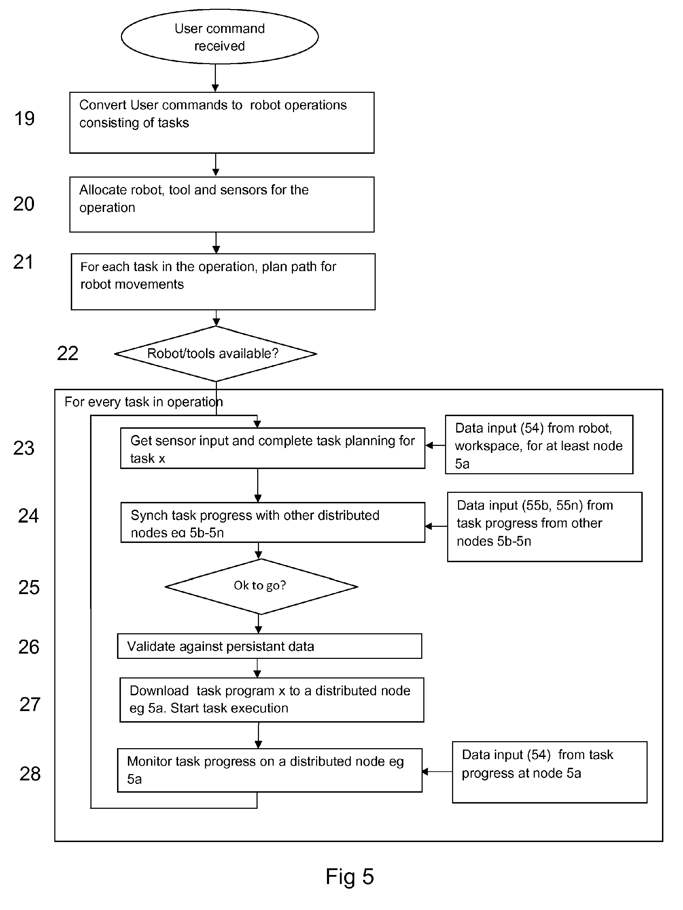

Figure 5 shows a schematic flowchart for a method according to the invention of Figure 1 and in particular method steps for handling the robot program at a remote or central location and communications with distributed nodes and work areas according to an embodiment of the invention;

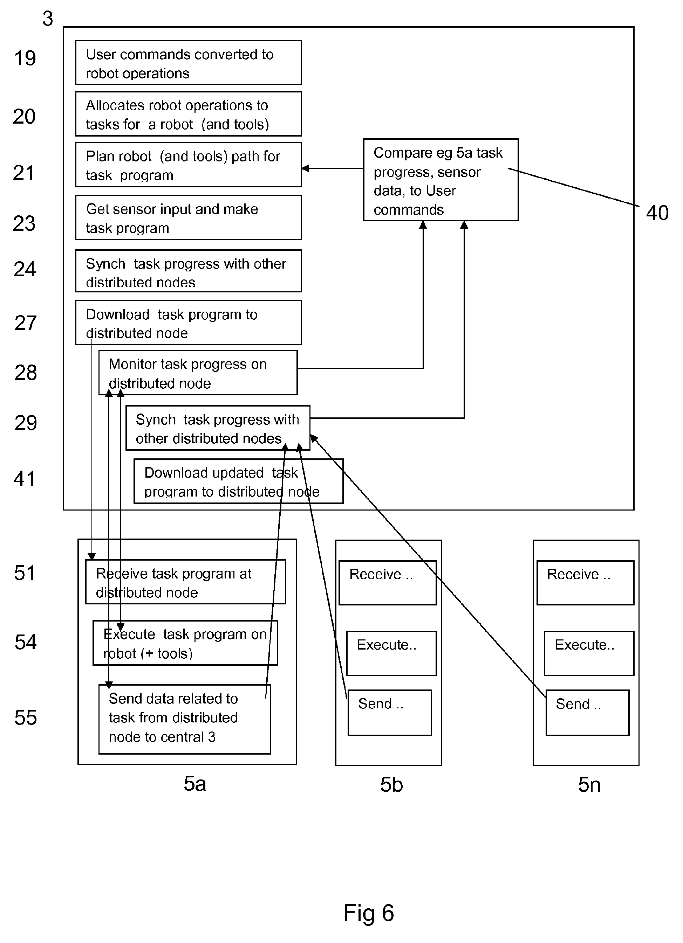

Figure 6 is a schematic diagram for a system for carrying out the method of Figure 1 in one or more of a plurality of distributed nodes and in particular with relations between those distributed nodes and a remote or central location according to another embodiment of the invention.

### DESCRIPTION OF THE PREFERRED EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete.

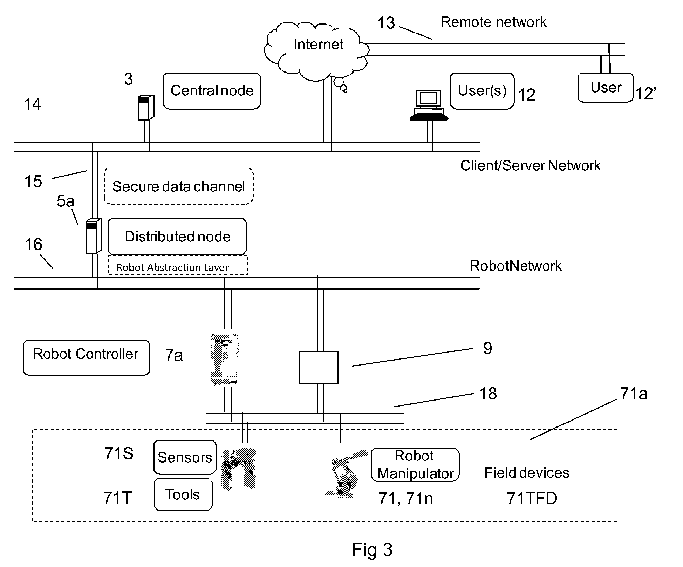

Figure 3 shows a system with robots arranged in work areas. The figure shows a work area 71 with a robot 71, arranged with sensors 71S, tool 71T. The work area may comprise one or more field devices 71TFD. Figure 3 also shows a Robot controller 7a connected to the robot 71 in work area 71a and to a first data network 16 for robot communications. A data network or Fieldbus 18 connects the robots, tools and sensors to a robot controller 7a. A local controller 9 is shown connected to a robot network 16 and to a Fieldbus 18. The figure also shows a distributed node 5a which is arranged connected to the Robot network 16 and to a second data network, a client/server network 14, by means of a secure data channel 15. The distributed node is typically placed within a secured area close to the robot(s) and is placed on the same data network 16 as the robots. The robot network is preferably a restricted LAN, real or virtual, that connects the distributed node with one or more robots. The communication between the distributed node and the robots may be non-secured when this LAN is dedicated and when it is physically located in a restricted and secured area. One distributed node may handle one or more robots. One robot may however be connected to more than one distributed node.

A remote or central node 3 is shown which is connected by the secure data channel 15 to distributed node 5a. The secure channel may be a dedicated transmission line. The secure channel may also or instead be achieved using applications or processes such as virtual networks, virtual private networks, firewalls and the like for providing secure communication. To enhance security, the distributed node may be configured to accept only a limited number of commands specified in an interface; distributed nodes may also be configured to only accept requests from the central node. The central node 3 is also connected via the client server network 14 to one or more users 12 and to users 12' connected via other data links or networks, for example via a connection 13 through the Internet.

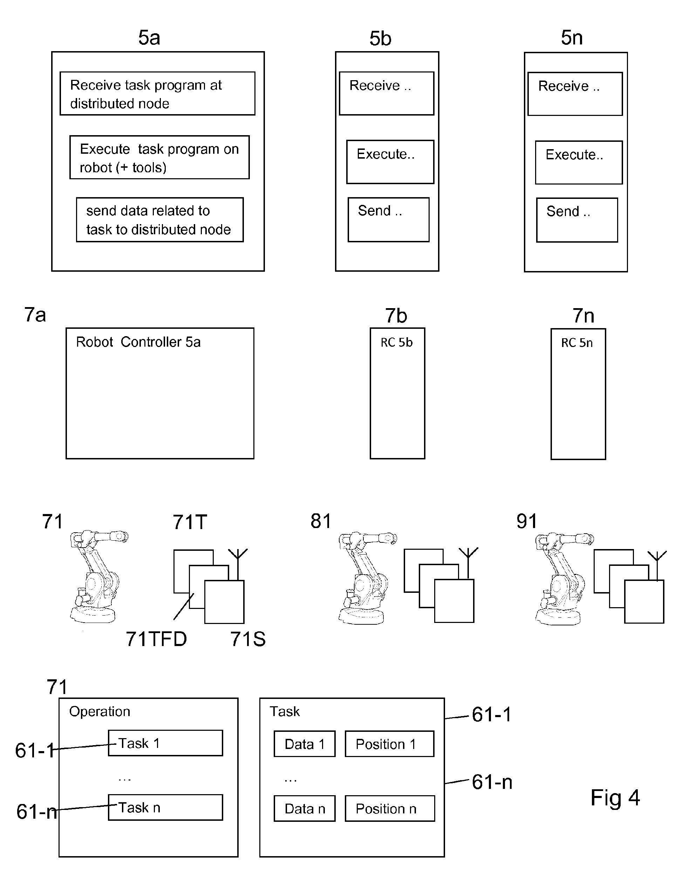

Figure 4 shows the distributed nodes 5a-n in more detail. It shows three distributed nodes 5a, 5b and 5n. In this exemplary drawing there is one robot controller eg 7a for one distributed node eg 5a and one industrial robot eg 71, but this is a simplification. Each distributed node may interact with a number of robot controllers. Each robot controller may interact with more than one distributed node. Each robot controller eg 7a may interact with a plurality of robots eg 71. For example one distributed node such as node 5a may interact with a plurality of robot controllers 7a, 7b, 7n and each said robot controllers may interact with a plurality of robots 71, 71-1, 71-n (not shown). The figure shows 3 industrial robots 71, 81, 91 which may interact with different distributed nodes in this example. Each robot may be arranged with one or more tools such as 71T with robot 71, there may be sensors such as 71S and there may be one or more field devices 71TFD arranged in the work area of one or more robots.

One or more robots may be equipped with a common robot tool such as a gripper, clamp, jaw, claw, or manipulator. A robot may also be equipped with a more specialised tool such as a paint spray gun or a welding gun. Such tools may be mounted on the last axis of the manipulator or robot eg in/on the wrist of a robot arm. One robot may be arranged and programmed to use different tools and sensors utilizing, for example, a tool changing system. The robot then has a pneumatic, hydraulic or electric device to pick up the tools from a tool stand. Such a tool stand may also be shared between robots with intersecting work areas, hence all robots sharing a tool stand can use the same tools.

The figure shows that at each distributed node, 5a, a task program may be received, following validation etc (not shown) it is executed and data related to the task is sent back to the distributed node. The robot is driven by a robot program to suit a specific robot type downloaded from distributed node 5a to a robot controller, in this example 7a, which sends movement instructions to the robot 71. Robot 71 and any tool 71T required are operated according to the robot program (derived from the task program, a non-robot specific movement program developed in the central node 3). Because the task program is validated by the distributed node against locally held persistent data, data for example held by the robot controller, before a robot-specific program is generated from the task program, then different robot types, eg robots from different manufacturers, may be handled. In addition to the position and robot configuration data for task execution held the robot controller 7a, sensor data and other data, even tool data from the work area may also be locally stored in association with the distributed node. Sensor and/or tool data may also be held or read by a local controller 9 and made available to at least the distributed node.

The figure shows that during operation each robot 71, 81, 91 may be driven by robot programs to execute Task 1, Task 2 .. to Task n. Thus data from robot/tool Operation during the execution of a robot program will include position information 62-1 from the robot, robot axes and/or and robot tool point as it moves along a programmed path through waypoints and so on during eg Task 1, 61-1. Data gathered during Task 1 is sent back to the distributed node, shown as Data 1, reference 62-1. Such data gathered during a task comprises sensor readings, events, alarms, status information, and configuration information that may be evaluated as feedback. Such data gathered during a task may also be used to verify that a configuration is correct by comparing in a process of the distributed node a completed part of a task with persistent configuration data for said robot.

The same process occurs for subsequent tasks, thus for Task n reference 62-n Data n information and Position n information 62-n is gathered and sent back to the distributed node. By this means the status of operations and other data is gathered and used. The central node then reports status of operations and other data back to the user interface, on events such as operation complete or on request from the interface, such as for example by updating the current position of a robot so that the user whether a remote or a local user may monitor progress of a task.

Figure 5 shows a series of method steps which take place at a central node, beginning with receiving an command from a user. This method of controlling a robot is based on a user command which may concern a task that is pre-planned, such as a task to 'move the robot to inspection point B'; open/close valve 33', or even a complex task such as 'replace valve 33'. As well the user command be in respect of a task which depends, for example, on a result of sensor reading, or other data. For example a task may be 'pick up object C at position D', in which case the position of the object has been determined in a previous step. The tasks in an operation are executed sequentially and if one task fails the next task coming can probably not be executed. However, the advantage with the described methods is that any user can monitor progress of a task, and a user may input a user command to request a robot operation to recover from or otherwise deal with a task that does not complete successfully.

The user command is received in computer controlled system of the central node 3 and the method of handling that user command and converting it to a task program for a robot (respectively robot and tool) comprises some or all of the following steps
19 convert user commands to robot operations consisting of tasks
20 Allocate one or more robots and tools to the tasks of the operation and
21 For each task in the operation, plan a path for robot movements
22 Check that each robot and/or tool is available;
then for each task in the operation:
23 Get sensor input (step 54 from robot and work area, from at least distributed node 5a) and complete task planning for the present task;
24 Synchronise task progress with other distributed nodes eg 5b-5n (includes receiving data (55b, 55n) on task progress from other nodes),
25 OK to go? (checking input data from other nodes, for example to check that a path in the current work area (71a) is free or otherwise to avoid collisions, or to check task progress to coordinate with another robot when more than one robot is cooperating on the same task),
26 Validate against persistent data (check with persistent data stored centrally eg robot status, robot position, free space required around robot, position of other robots, tools relative current work area, tool status),
27 Download current task program x to a distributed node (eg 5a).

The operations that take place at a central location or remote location in association with a central node 3 are described as follows. Sensor data from a sensor such as 71S in Figure 3, position data, robot operational data and other data is acquired at the work area and robot, sent to central node, analysed, made available and stored in association with the central node 3. The persistent data about each robot and tool is also stored in association with central node 3. This includes data such as robot status, robot position, free space required around robot, layout of robot in work area, CAD data or 3-D model data of the plant or location, position of other robots, tools relative current work area, tool status. The persistent data stored centrally is utilized in the central node to plan the paths, allocate robots, tools and sensors according to needs in the operation. During allocation of tasks to robots, as well as selecting a robot on a basis such as physical specification and capability (reach, turning circle, speed, lifting capacity and so on) the type of tool is also taken into account. Thus when a particular tool is required the capacity of the tool is compared to the task as well as to which robot or robots it is already fitted; or to which robot it may be mounted on efficiently. As well, by using the persistent data, each task program can be validated centrally to ensure that the robot can carry out the necessary movements for carrying out one or more user commands such that; the task is carried out, data is gathered on the progress of the task, and so that there will not be any collisions with the robot or with objects in the work area. The use of persistent data for validation and for monitoring progress means that more two or more industrial robots may be operated in parallel because of the functionality available for synchronising robot operations.

High Level Motion Planning is carried out at the central node such that commands made by a remote operator such as 12, 12' in Figure 3 are converted into a series of tasks. Data from the workplaces, received and analysed at the central node, is used for making one or more task programs (which are in essence movement programs) for at least one robot and/or robot plus tool to make a series of movements along a pre-programmed path comprising waypoints, tool operation points and so on, in order to carry out each task. The Motion Control function receives the task programs as generic robot programs and sends the task programs to a distributed node such as 5a, where the generic task program is converted them to a program to run on a specific robot. Node 5a then downloads the specific robot program to a robot controller such as 7a of a robot 71 in a work area such as 71a, as indicated by the Robot Manipulator function.

Figure 6 shows in a diagram steps and functions that take place at a central node such as central node 3 and at a distributed node such as nodes 5a, 5b and 5n. The figure shows some of the same steps shown in Figure 5, these being steps 19 to 21, then:
19 user commands converted to robot operations
20 Allocate robot operations to tasks for a robot, tool, sensors
21 Plan robot (and tool) path for task program,
23 Get sensor input and make task program
24 Synchronise task progress with other distributed nodes 27 Download task program to distributed node (eg 5a) 51 receive task program at distributed node
28 Monitor task program on distributed node (eg 5a)
   54 Execute task program on robot (+ tools, + sensors)
40 Compare task progress, sensor data, at eg 5a to user command/robot operation
   55 Send data related to task from distributed node (eg 5a) to central node 3
29 Synchronise task progress on 5a with events at other nodes 5b, 5n 41 Download updated task program to distributed node (eg 5a) Figures 1 and 2 show method steps that take place at, respectively, the distributed node such as 5a and at the robot controller such as 7a. Please refer also to Figure 3. Figure 1 shows a process at a distributed node beginning with
51 Receive task program at distributed node (eg 5a)
52 Validate task program locally against robot configuration (eg for 71 or 71-1, or 71-n) stored separately (the program is validated against persistent data relative to each robot and tool held in a the robot controller such as 7a and/or in the distributed node such as 5a to ensure the program can be executed on a robot eg 71)
53 Convert the task program to a robot program, which is a movement program for a specific robot,
54 Execute - start robot movements to carry out task and send data to robot controller (eg 7a),
55 Data from running the robot program to carry out task also sent to a process in the distributed node (eg 5a) to monitor progress and/or update the current task program,
56 Data from running the robot program to carry out task and sensor data also sent to separate or central node 3 (for central validation and for synchronization with operations at other distributed nodes and work areas).

Data from running the robot program gathered in a distributed node such as 5a may be written to a log which records that all the elements in a task have been carried out. The task log may be stored locally at the distributed node: preferably it is as well, or instead, stored centrally at a central node, for example for audit purposes. The benefit of the task log is to record that each separate operation in a task has been successfully carried out. This ensures that during safety related procedures such as procedures when human operators are present in a work area, or safety related procedures including a critical operation, for example opening or closing a valve, that there is a permanent record that each operation or element in a task has been completed. This (a) ensures that a subsequent operation or element may then be permitted to take place; as well as (b) to record that the task as a whole has been completed. The log may also contain data about which mechanical units, the date, time, actions and critical data per part of the completed task.

Figure 2 shows a process at a robot controller in a work area such as 71a, which has received a movement program in the form of a robot program from a distributed node such as node 5a, beginning with steps:
60 Receive robot program in local robot controller 7a from distributed node 5a, (the robot program has been converted from a task program, based on a conversion for one or more user commands, and it has instructions for a specific robot for carrying out part of a task)
61 Execute robot program on robot (71) with tool(s) (71T) (with tools and with instructions for tools as required)
62 Send data related to task back to distributed node 5a.
65 Robot program progress monitored and task program/robot program updated by distributed node 5a.

In another embodiment of the invention the distributed node may be arranged integrated with a robot controller instead of as a stand-alone unit. The functions of the distributed unit are in this embodiment arranged as one or more circuits, circuit boards together with firmware or other computer code, computer programs for carrying out the functionality included in a robot controller (7a, 7b, 7n) unit.

In another embodiment of the invention the task program sent from the central node to the distributed node may already be arranged to be run on a known robot. The known robot is a predetermined type of robot. The predetermined type of robot may be the only type of robot at an installation or work area. Thus the distributed node downloads the task program as a robot program that is already suitable to be run on a robot connected to the robot controller.

The methods of controlling one or more industrial robots as described in this specification may be carried out by one or more computer applications comprising computer program elements or software code which, when loaded in a processor or computer, causes the computer or processor to carry out the method steps, for example the methods described in relation to Figure 1, 2, 5 and 4. Some of the above method steps may be carried out by processing digital functions, algorithms and/or computer programs and/or by analogue components or analogue circuits or by a combination of both digital and analogue functions. Processors may be standard processors and/or may be hardware or configurable hardware such as a Field-Programmable Gate Array (FPGA). The processors or microprocessors may as well or instead comprise hardware such as a Complex Programmable Logic Device (CPLD) or an Application Specific Integrated Circuit (ASIC) may be used.

The methods of the invention may, as previously described, be carried out by means of one or more computer programs comprising computer program code or software portions running on a computer or a processor. The microprocessor (or processors) comprises a central processing unit CPU performing the steps of the method according to one or more facets of the invention. This is performed with the aid of one or more said computer programs, such as, which are stored at least in part in memory and as such accessible by the one or more processors. The or each processor may be in a memory storage unit of a process system control unit or a controller 9 or control unit or a PLC (Programmable Logic Controller) in the work area or other system part thereof, or may as well run in central node or remote control unit system in a local or distributed computerised control system. It is to be understood that said computer programs may also be run on one or more general purpose industrial microprocessors or computers instead of one or more specially adapted computers or processors.

The computer program comprises computer program code elements or software code portions that make the computer perform the method using equations, algorithms, data, stored values and calculations previously described. A part of the program may be stored in a processor as above, but also in a ROM, RAM, PROM, EPROM or EEPROM chip or similar memory means. The program in part or in whole may also be stored on, or in, other suitable computer readable medium such as a magnetic disk, such as a CD (compact disc) or a DVD (digital versatile disc), hard disk, magneto-optical memory storage means, in volatile memory, in flash memory, as firmware, stored on a data server or on one or more arrays of data servers. Other known and suitable media, including removable memory media such as Sony memory stick (TM) and other removable flash memories, hard drives etc. may also be used. The computer programs described may also be arranged in part as a distributed application capable of running on several different computers or computer systems at more or less the same time. Data may be accessed by means of any of: OPC, OPC servers, an Object Request Broker such as COM, DCOM or CORBA, a web service.

It should be noted that while the above describes exemplifying embodiments of the invention, there are several variations and modifications, in particular to data communication architectures and protocols between a remote and one or more local nodes which may be made to the disclosed solution without departing from the scope of the present invention as defined in the appended claims.

## Claims

1. A method for controlling at least one robot in a robot work area, said work area comprising said robot, a robot controller (7a-n) and at least one tool and/or sensor for carrying out one or more movements to carry out a task, said robot being controlled by means of instructions in a robot program running in said robot controller, **characterised by** receiving (51), at a distributed node (5a-n), a task program for carrying out at least part of said task based on a conversion (19) of a user command from a user (12, 12'), and sending (54) from the distributed node to said robot controller (7a-n) a robot program based on the task program with instructions for said robot (71, 81, 91) to execute one or more movements.

2. A method according to claim 1, **characterised by** validating (26) on a central node the task program against persistent control data for said robot.

3. A method according to claim 1, **characterised by** validating (52) on the distributed node (5a) the task program against persistent control data stored in association with the distributed node for said robot, or against data read by said distributed node from said robot controller (7a-n).

4. A method according to claim 1, **characterised by** receiving in the robot controller (7a-n) from the distributed node data related to the execution of one or more movements of said robot in the task program from said robot work area, and sending (62) the data from said work area to at least the distributed node (5a).

5. A method according to claim 1, **characterised by** receiving in the at least the distributed node (5a) data from devices (71S, 71T, 9) in said robot work area, monitoring progress of the task in the distributed node and/or updating the task program.

6. A method according to claim 1, **characterised by** sending (56), from the distributed node to a central node (3) data related to the execution of one or more movements by said robot in the task program and/or data from devices (71S, 71T, 9) in said robot work area and storing said data.

7. A method according to claim 6, **characterised by** receiving (23) from the distributed node data related to the execution of one or more movements by said robot in the task program and/or data from devices (71S, 71T, 9) in said robot work area and storing said data at the central node (3).

8. A method according to claim 1, **characterised by** updating said task program (55, 40, 41) dependent on data received at the central node related to the execution of one or more movements of said robot the task program.

9. A method according to any one of claims 1-8, **characterised by** synchronizing (24, 29) task progress in said work area (71a) with movements in other work areas based on data related to the execution of one or more movements of said robot and/or said tool in the task program with data from one or more other distributed nodes (5b, 5n).

10. A method according to claim 1, **characterised by** updating, dependent on data related to the execution of one or more movements said robot and/or said tool in the task program, a task log for recording all events for the task.

11. A distributed node for controlling at least one robot in a robot work area comprising said robot, a robot controller (7a-n) and at least one tool and/or sensor for carrying out one or more movements to carry out a task, said robot being controlled by means of instructions in a robot program running in said robot controller, **characterised in that** said distributed node (5a-n) comprises a control unit and computer programs for receiving (51) a task program for carrying out at least part of said task based on a conversion (19) of a user command from a user (12, 12'), and is connected to a data network (16) for sending (54) from said distributed node to said robot controller (7a-n) a robot program based on the task program with instructions for said robot (71, 71n) to execute one or more movements.

12. A distributed node according to claim 11, **characterised in that** said distributed node (5a-n) comprises a control unit and computer programs for validating (52) the task program against locally held persistent control data for at least one robot or against data read by said distributed node from said robot controller (7a-n).

13. A distributed node according to claim 11, **characterised in that** said unit is connected to one or more data networks (16, 15, 14) for sending (56), from the distributed node to a remote control unit or central node (3), data related to the execution of one or more movements of said robot in the task program and storing the execution data for said task.

14. A distributed node according to claim 11, **characterised in that** said unit is connected to a secure data network (15) arranged with apparatus and/or processes for providing secure communication with the central control unit or central node (3).

15. A distributed node according to claim 11, **characterised in that** said distributed unit is arranged as one or more circuits and computer programs incorporated as one or more modules of a robot controller (7a, 7b, 7n).

16. A central node for controlling at least one robot in a robot work area comprising said robot, a robot controller (7a-n) and at least one tool and/or sensor for carrying out one or more movements to carry out a task, said robot being controlled by means of instructions in a robot program running in said robot controller, **characterised in that** said central node (5a-n) and comprises at least one processor and computer program for sending (27), to at least one distributed node (5a-n), and a task program for carrying out at least part of said task based on a conversion (19) of a user command from a user (12, 12').

17. A central node according to claim 16, **characterised by** comprising a memory storage unit containing computer software applications for converting (19) user commands to robot operations.

18. A central node according to claim 16, **characterised by** a data connection to computer readable stored persistent control data for at least one said robot and by a memory storage unit containing computer software for validating the task program with the persistent control data.

19. A central node according to claim 16, **characterised in that** said unit is connected to one or more data networks (13, 14, 15) for receiving user commands from one or more users (12, 12') as input for user commands to at least one said robot.

20. A computer program stored on a computer readable medium, which computer program when executed performs the steps of any of claims 1-10.
